# EUROPEAN PATENT APPLICATION

(11) **EP 4 851 676 A1**
(43) Date of publication of application: **09.12.2026**
(21) Application number: 25305820.0
(22) Date of filing: 05.06.2025
(51) Int. Cl.: G02B 1/04, G02B 1/10

(54) **AN OPTICAL ARTICLE COMPRISING A COATING PROVIDING MYOPIA PROGRESSION CONTROL**

(71) Applicant: Essilor International, 94220 Charenton-Le-Pont (FR)
(72) Inventor: KASTURE, Prakhar, 339346 Singapore (SG); BHANGALE, Sunil Madhukar, 689682 Singapore (SG); DROBE, Bjorn, 479251 Singapore (SG); YU, Hui, 122210 Singapore (SG)
(74) Representative: Ipsilon

(57) **Abstract**

This ophthalmic lens comprises a coating which comprises at least one first component providing light diffusion and at least one second component emitting red light in a wavelength range from 600 nm to 750 nm when excited by ultraviolet light, so as to slow down myopia progression.

## Description

### FIELD OF THE INVENTION

The present invention relates to an optical article comprising a coating providing myopia progression control.

In the present disclosure, the terms myopia progression control, myopia progression slowing down and myopia progression reduction are used with equivalent meanings.

### BACKGROUND OF THE INVENTION

Myopia progression has been established through many observations and well documented for several years, although its causes are still subject to research. Myopia progression is the fact that for one person, his/her myopia increases with time at a rate which almost did not exist before. Kids are the most concerned with myopia progression, and it is thus a major issue to address this problem. Near work and lack of outdoor activities are suspected as being causes for myopia progression, but the actual biological phenomena and mechanisms which lead to myopia progression remain at hypothesis level.

Several principles and methods have already been proposed for controlling the vision default progression of the myopic eye of a person.

A method consists in adding to ophthalmic lenses, i.e. spectacle lenses or contact lenses, used for correcting the vision of the myopic eye, a plurality of optical elements having a spherical optical function, which focus incoming light in front of the retina of the eye, in addition to the light crossing the ophthalmic lenses out of the plurality of optical elements that is focused on the retina, for providing sharp vision to the wearer who is equipped with these spectacle lenses or contact lenses.

Another method consists in adding to the ophthalmic lenses used for correcting aspherical myopia a plurality of optical elements having a non-spherical optical function.

Still other methods implement progressive addition lenses which provide power addition to compensate for the lack of accommodation, or bifocal prismatic lenses for producing both the power addition and a prism effect.

All the previous methods are based on lenses that are designed for modifying wavefronts of the light that enters the eyes of the wearer or modifying wavefronts of part of this light.

Further methods are based on other principles, such as administering atropine to the subject, or wearing rigid contact lenses during nights for modifying the shape of the cornea.

Studies have been performed recently that suggest a role of red light in myopia progression control. Such a study is described in an article by Jiang et al. entitled "Effect of Repeated Low-Level Red-Light Therapy for Myopia Control in Children - A Multicenter Randomized Controlled Trial", in Ophthalmology, vol. 129, No. 5, May 2022, pages 509-519, finding that 650 nm red light therapy is effective in controlling myopia to some extent, but does not completely halt its progression. Moreover, prior art red light therapy has several drawbacks: it necessitates an external device in addition to spectacles, it requires multiple constraining daily sessions, it faces compliance issues, e.g. with only 75% compliance in the above-mentioned study, and it can be uncomfortable due to brightness of red light, leading to discontinuations in clinical trials.

Another method for managing the progression of myopia involves contrast reduction. Studies have suggested that increased contrast at retinal photoreceptors may contribute to the development and worsening of myopia. A unique lens design known as SGV (Sight Glass Vision) lens has been developed to decrease the contrast of peripheral visual targets. These lenses feature a dot pattern distributed across each lens, comprising an array of dots alongside a clear aperture. These dot lenses claim to achieve a 59% reduction in myopia progression over two years.

There is a need to provide a new solution for myopia progression control having improved efficiency with respect to the prior art solutions and being easy to use.

### SUMMARY OF THE INVENTION

An object of the present disclosure is to overcome the above-mentioned drawbacks of the prior art and meet the above-mentioned need.

To that end, the present disclosure provides an ophthalmic lens, comprising a coating which comprises at least one first component providing light diffusion and at least one second component emitting red light in a wavelength range from 600 nm to 750 nm when excited by ultraviolet light, so as to slow down myopia progression.

Thus, the present disclosure provides an ophthalmic lens equipped with a specialized coating that facilitates diffusion, thereby reducing contrast. In addition, the same coating also induces red light emission, resulting in passive red light therapy. Namely, light therapy is delivered almost continuously, outdoor, at a lower intensity than in prior art red light therapy, cumulatively reaching comparable light levels, leading to better compliance and minimal disturbance.

Thus, the combination of diffusion and red light emission provides a more effective solution for slowing down myopia progression, as diffusion and red light emission act on different mechanisms and occur simultaneously. In addition, the proposed solution is very easy to use, as it merely requires wearing the ophthalmic lens. Moreover, contrary to existing DOT (Diffusion Optics Technology) lenses currently available on the market, which incorporate translucent microscopic diffusers lacking aesthetic appeal, the proposed ophthalmic lens remains visually appealing.

In an embodiment, the at least one first component providing light diffusion comprises polyurethane and a solvent or a combination of solvents.

In an embodiment, the solvent is isopropyl alcohol.

In an embodiment, the combination of solvents is a mixture taken from a group comprising: 50% of isopropyl alcohol and 50% of 1-methoxy-2-propyl acetate, 80% of isopropyl alcohol and 20% of acetone, 80% of isopropyl alcohol and 20% of tetrahydrofuran, 20% of isopropyl alcohol and 80% of acetone, 20% of isopropyl alcohol and 80% of tetrahydrofuran.

In an embodiment, the at least one second component emitting red light comprises a fluorescent material.

In an embodiment, the fluorescent material comprises a fluorescent dye.

In an embodiment, the fluorescent dye is a metal complex taken from a group comprising europium complexes, terbium complexes, iridium complexes, aluminum complexes.

In an embodiment, the fluorescent dye is taken from a group comprising a Tris(dibenzoylmethane)mono-(phenanthroline)europium (III) dye having a maximum wavelength of emission of 609 nm, an iridium (III) Tris(1-phenylisoquinoline) dye having a maximum wavelength of emission of 613 nm, a Tris(dinaphtoylmethane)-mono(phenanthroline)europium (III) dye having a maximum wavelength of emission of 612 nm, an Sc-25 europium dye, an Sc-30 europium dye.

In an embodiment, the fluorescent material comprises at least one quantum dot.

In an embodiment, the quantum dot is taken from a group comprising a carbon quantum dot such as a Carbon dot bright red/7440-44-0 quantum dot having a maximum wavelength of emission of 600 nm, a silicon quantum dot such as a Functionalized Silicon quantum dot having a maximum wavelength of emission of 610 nm, a cadmium selenide zinc sulfide CdSe/ZnS core-shell type quantum dot such as a DiagNano^{™} COOH CdSe/ZnS quantum dot having a maximum wavelength of emission of 640 nm.

To the same end, the present disclosure also provides a method for slowing down myopia progression of an eye of an individual, comprising wearing by the individual, in front the eye, an ophthalmic lens as succinctly described above.

As the particular characteristics and advantages of the method are the same as those of the ophthalmic lens, they are not repeated here.

### DETAILED DESCRIPTION OF EMBODIMENTS

Although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

An ophthalmic lens according to the present disclosure may be part of a pair of eyeglasses, or may be a contact lens.

The ophthalmic lens may have a spherical power value suitable for correcting a myopia of the wearer, but this is not mandatory, as the disclosure may also be used for a person devoid of myopia, to avoid that such myopia appears and increases later for that person. In such a case, the lens does not have any spherical power and is commonly referred to as a plano lens.

According to the disclosure, the ophthalmic lens is intended to slow down a myopia progression that may otherwise concern the wearer.

To that end, the ophthalmic lens comprises a coating which comprises at least one first component providing light diffusion and at least one second component emitting red light in a wavelength range from 600 nm to 750 nm when excited by ultraviolet light.

The at least one first component providing light diffusion may comprise polyurethane and a solvent.

The solvent may be isopropyl alcohol.

As a variant, the at least one first component providing light diffusion may comprise polyurethane and a combination of solvents.

As a non-limiting example to obtain a polyurethane matrix ready to use, the following steps can be carried out.
1. Weigh and add 8.1672 g of propylene carbonate and 8.84 g of isopropyl alcohol into a 50 ml container.
2. Once the initial mixture is ready, weigh and add 5.688 g of 1.3-cyclohexane into the same container.
3. Stir the mixture at 300 rpm, i.e. 300x2π/60 rad.s⁻¹, for 24 h.
4. Following the initial mixing, continue stirring the mixture at 300 rpm, i.e. 300x2π/60 rad.s⁻¹, for an additional 48 h at a temperature of 50°C. After 72 h of the reaction, a clear and viscous liquid of polyurethane matrix is obtained.

The combination of solvents may be a mixture taken from a group comprising: 50% of isopropyl alcohol and 50% of 1-methoxy-2-propyl acetate, 80% of isopropyl alcohol and 20% of acetone, 80% of isopropyl alcohol and 20% of tetrahydrofuran, 20% of isopropyl alcohol and 80% of acetone, 20% of isopropyl alcohol and 80% of tetrahydrofuran.

A mixture of 50% of isopropyl alcohol and 50% of 1-methoxy-2-propyl acetate results in low diffusion (which may be graded as a diffusion level value of 1, on a scale from 0 meaning no diffusion to 5 meaning the highest diffusion), as 1-methoxy-2-propyl acetate significantly attenuates diffusion when mixed with isopropyl alcohol.

A mixture of 80% of isopropyl alcohol and 20% of acetone leads to moderate diffusion (which may be graded as a diffusion level value of 2), slightly enhanced compared to the previous mixture.

A mixture of 80% of isopropyl alcohol and 20% of tetrahydrofuran yields moderate diffusion (which may be graded as a diffusion level value of 2).

A mixture of 20% of isopropyl alcohol and 80% of acetone produces enhanced diffusion (which may be graded as a diffusion level value of 3), showing that a higher acetone concentration increases diffusion.

The use of a single solvent, namely isopropyl alcohol, also produces enhanced diffusion (which may be graded as a diffusion level value of 4), highlighting the strong influence of a single solvent.

A mixture of 20% of isopropyl alcohol and 80% of tetrahydrofuran achieves the highest diffusion among all the above examples (which may be graded as a diffusion level value of 5).

Thus, when using a mixture of solvents, by modifying the solvent ratios, the level of diffusion can be precisely adjusted to meet application requirements.

The at least one second component emitting red light may comprise a fluorescent material, i.e. which emits light by fluorescence in a wavelength range from 600 nm to 750 nm when excited by ultraviolet (UV) light, in particular UV light comprised in ambient light.

The chemical nature of the fluorescent material is not particularly limited, provided that it is capable of emitting light in the red light range, by fluorescence, when excited by UV light.

The fluorescent material may comprise a fluorescent dye, such as a Stokes dye, for example SC-30 from Angstrom Technologies. SC-30 is a colorless dye absorbing UV light and emitting red light, which is applied onto substrates via coating.

The fluorescent dye may be a metal complex taken from a group comprising europium complexes, terbium complexes, iridium complexes, aluminum complexes. It may be any derivative or combination of such complexes.

For example, the fluorescent dye may be taken from a group comprising a Tris(dibenzoylmethane)mono-(phenanthroline)europium (III) dye, also named ADS051 RE, having a maximum wavelength of emission of 609 nm, an iridium (III) Tris(1-phenylisoquinoline) dye, also named ADS068RE, having a maximum wavelength of emission of 613 nm, a Tris(dinaphtoylmethane)-mono(phenanthroline)europium (III) dye, also named ADS053RE, having a maximum wavelength of emission of 612 nm, an Sc-25 europium dye, an Sc-30 europium dye.

As a variant, the fluorescent material may comprise at least one quantum dot.

Quantum dots are particles that absorb light in the UV and/or violet region and re-emit light in a selected range of light wavelengths. For example, quantum dots are made from or incorporate one or more of the following elements: carbon (C), silicon (Si), cadmium (Cd), germanium (Ge), tin (Sn), flerovium (FI).

A suitable quantum dot for use in the coating of the ophthalmic lens according to the present disclosure may be taken from a group comprising a carbon quantum dot such as a Carbon dot bright red (CAS number: 7440-44-0) quantum dot having a maximum wavelength of emission of 600 nm, a silicon quantum dot such as a Functionalized Silicon quantum dot having a maximum wavelength of emission of 610 nm, a cadmium selenide zinc sulfide CdSe/ZnS core-shell type quantum dot such as a DiagNano^{™} COOH CdSe/ZnS quantum dot having a maximum wavelength of emission of 640 nm.

In addition, a suitable hard coat and an antireflective coating that allows the maximum amount of UV light to pass through can be applied on the coating comprised in the ophthalmic lens according to the present disclosure, in order to further enhance the aesthetics of the lens.

The coating comprised in the ophthalmic lens according to the present disclosure may be applied on the front and/or rear faces of the ophthalmic lens.

A non-limiting example of a formulation of a coating comprised in the ophthalmic lens according to the present disclosure is given in Table 1 below, which gives the weight of each component both in g and in %. The total of the numbers in the column giving weights in % is actually 99.99 instead of 100, due to a round-off error.

**Table 1**

| **Components** | **Weight (g)** | **Weight (%)** |
|---|---|---|
| Propylene carbonate | 0.25 | 1.96 |
| 1,3 cyclohexane (methylamine), mixture of isomers | 0.36 | 2.83 |
| Isopropyl alcohol | 11.12 | 87.35 |
| Dye (SC-30) | 0.07 | 0.55 |
| BYK^{®}-348 | 0.045 | 0.35 |
| Aluminum acetylacetonate | 0.195 | 1.53 |
| HDT-LV2 | 0.69 | 5.42 |
| **Total** | **12.73** | **100.00** |

The component BYK^{®}-348 is a silicon surfactant reducing surface tension. Aluminum acetylacetonate is a catalyst.

The component HDT-LV2 is a cross-linking agent.

The coating comprised in the ophthalmic lens according to the present disclosure may be applied onto a substrate through spin coating. As a variant, the coating may be applied onto a substrate through dip coating or spray coating.

A method according to the present disclosure, for slowing down myopia progression of an eye of an individual, comprises wearing by the individual, in front of the eye, an ophthalmic lens as described above.

Although representative devices and methods have been described in detail herein, those skilled in the art will recognize that various substitutions and modifications may be made without departing from the scope of what is described and defined by the appended claims.

## Claims

1. An ophthalmic lens, comprising a coating which comprises at least one first component providing light diffusion and at least one second component emitting red light in a wavelength range from 600 nm to 750 nm when excited by ultraviolet light, so as to slow down myopia progression.

2. The ophthalmic lens according to claim 1, wherein said at least one first component providing light diffusion comprises polyurethane and a solvent or a combination of solvents.

3. The ophthalmic lens according to claim 2, wherein said solvent is isopropyl alcohol.

4. The ophthalmic lens according to claim 2, wherein said combination of solvents is a mixture taken from a group comprising: 50% of isopropyl alcohol and 50% of 1-methoxy-2-propyl acetate, 80% of isopropyl alcohol and 20% of acetone, 80% of isopropyl alcohol and 20% of tetrahydrofuran, 20% of isopropyl alcohol and 80% of acetone, 20% of isopropyl alcohol and 80% of tetrahydrofuran.

5. The ophthalmic lens according to any of the preceding claims, wherein said at least one second component emitting red light comprises a fluorescent material.

6. The ophthalmic lens according to claim 5, wherein said fluorescent material comprises a fluorescent dye.

7. The ophthalmic lens according to claim 6, wherein said fluorescent dye is a metal complex taken from a group comprising europium complexes, terbium complexes, iridium complexes, aluminum complexes.

8. The ophthalmic lens according to claim 7, wherein said fluorescent dye is taken from a group comprising a Tris(dibenzoylmethane)mono-(phenanthroline)europium (III) dye having a maximum wavelength of emission of 609 nm, an iridium (III) Tris(1-phenylisoquinoline) dye having a maximum wavelength of emission of 613 nm, a Tris(dinaphtoylmethane)-mono(phenanthroline)europium (III) dye having a maximum wavelength of emission of 612 nm, an Sc-25 europium dye, an Sc-30 europium dye.

9. The ophthalmic lens according to claim 5, wherein said fluorescent material comprises at least one quantum dot.

10. The ophthalmic lens according to claim 9, wherein said quantum dot is taken from a group comprising a carbon quantum dot such as a Carbon dot bright red/7440-44-0 quantum dot having a maximum wavelength of emission of 600 nm, a silicon quantum dot such as a Functionalized Silicon quantum dot having a maximum wavelength of emission of 610 nm, a cadmium selenide zinc sulfide CdSe/ZnS core-shell type quantum dot such as a DiagNano^{™} COOH CdSe/ZnS quantum dot having a maximum wavelength of emission of 640 nm.

11. A method for slowing down myopia progression of an eye of an individual, comprising wearing by said individual, in front of said eye, an ophthalmic lens according to any of the preceding claims.
